Europäisches Patentamt

European Patent Office

Office européen des brevets

(11) Publication number: **0 491 440 A1**

## (12) EUROPEAN PATENT APPLICATION

(21) Application number: **91203314.9**

(22) Date of filing: **16.12.91**

(51) Int. Cl.⁵: **G01M 17/04**

(30) Priority: **17.12.90 NL 9002780**

(43) Date of publication of application:
**24.06.92 Bulletin 92/26**

(84) Designated Contracting States:
**DE ES FR GB IT NL**

(71) Applicant: **ANALOGIC ENGINEERING B.V.**
**Pieter Goedkoopweg 24**
**NL-2031 EL Haarlem(NL)**

(72) Inventor: **Stuyts, Victor Cornelius Leopoldus**
**Hubertus**
**Korte Spaarne 31**
**NL-2011 AJ Haarlem(NL)**

(74) Representative: **de Vries, Johannes Hendrik**
**Fokke et al**
**Octrooibureau Los en Stigter B.V. P.O. Box**
**20052**
**NL-1000 HB Amsterdam(NL)**

(54) **Apparatus for testing the wheel suspension of a vehicle.**

(57) An apparatus for testing the wheel suspension of a vehicle comprises at least one measuring plate movable by an excitation mechanism. A processing unit is provided for processing measured values provided by a measuring device and for determining from these measured values a transfer function of the wheel suspension seen as a system. The measured result is displayed on a display. The processing unit determines a speed of the vehicle by means of the transfer function and the power spectrum of the roughness of a road surface with a predetermined quality, at which speed the probability that the wheel of the wheel suspension under test loses contact with the road surface is smaller than a predetermined value.

fig.3

The invention relates to an apparatus for testing the wheel suspension of a vehicle, comprising at least one measuring plate, a mechanism for moving the measuring plate, a measuring device, a processing unit for processing the measured values provided by the measuring device and for determining from these measured values a transfer function of the wheel suspension seen as a system, and a display for displaying a measured result.

In the known apparatus of the above-mentioned type the criterion for the road-holding safety of the wheel suspension under test in general and the action of the vibration absorbing element in the wheel suspension in particular is derived from the dynamic vertical force by means of the processing unit and the measuring signals of the measuring device. In this respect the road-holding safety is understood to mean the power of the wheel suspension to maintain the vertical force exerted by the wheel on the road surface at a constant value. This vertical force determines to a great extent the lateral forces and the brake forces which can be transferred to the road surface by the air tire of the wheel. In the known apparatus the performance of the wheel suspension is only tested in a very restricted frequency range and namely either at or close to the resonance frequency of the unsprung mass (the wheel) or at or close to the resonance frequency of the sprung mass (the body). The known apparatus have the disadvantage that the conclusions drawn from the measurements are not always correct because the road-holding safety of the vehicle is determined in practice by the performance of the wheel suspension over a much wider frequency range.

It is known that while driving on a road surface vibrations are introduced in the wheel suspension of the vehicle by the roughness of the surface of the road. Generally the roughness of the road surface is an irregular or stochastic variable. Thereby it is advantageous to describe the roughness of the road surface by means of known statistical methods. In that case it is possible to characterize a certain road surface section by the power spectrum of the roughness. Experiments have shown that these road surface roughness have a normal distribution as a good approximation. Thereby the statistics for normal distributions can be used for analyzing the road surface roughness. Up to the present these data known per se are only used in connection with vehicles for testing the vibration performance of the vehicle.

The invention aims to provide an apparatus of the above-mentioned type wherein the disadvantages of the known apparatus are obviated and wherein for testing the road-holding safety of the vehicle the performance of the wheel suspension in the complete frequency range of importance is taken into account. The invention is based on the insight that the statistic description of the road surface roughness can be advantageously used for this purpose.

According to the invention the apparatus of the above-mentioned type is characterized in that the processing unit determines a speed of the vehicle by means of the transfer function and the power spectrum of the roughness of a road surface with a predetermined quality, at which speed the probability that the wheel of the wheel suspension under test loses contact with the road surface is smaller than a predetermined value.

In this manner a vehicle speed is determined, at which the probability to lose contact with the road at the wheel suspension under test is smaller than a predetermined allowable value, wherein the full frequency range of importance of the vibration frequencies to which the wheel suspension under test is exposed, is taken into account.

This speed determined by the processing unit of the apparatus according to the invention, provides a simple criterion by means of which a judgment on the condition of the wheel suspension of the vehicle can be given.

According to the invention it is for example possible that the processing unit compares the speed as determined with the inputted design speed of the vehicle. The design speed can for example be determined by means of the speed rating of the air tire used by the car manufacturer.

As an alternative it is possible that the processing unit compares the speed as determined with a predetermined minimum value. This predetermined minimum value can be chosen for example a little higher than the maximum allowable speed in a country.

As an alternative it is also possible according to the invention that instead of said speed, the processing unit determines by means of a predetermined speed, for example the maximum allowable speed, the probability that the wheel of the wheel suspension under test loses contact with the road surface, wherein the processing unit compares this probability with a predetermined maximum value.

A favourable embodiment of the apparatus according to the invention is characterized in that the processing unit determines the spring constant of the air tire of the wheel of the wheel suspension under test from the transfer function and determines the tire compression from this spring constant and the static wheel load. Thereby the apparatus can give a simple indication for the stiffness of the air tire, so that the user can see if this stiffness corresponds with the desired stiffness of an air tire.

The invention will be further explained by reference to the drawings in which an embodiment of the apparatus according to the invention is schematically shown.

Fig. 1 shows in a perspective view schematically an embodiment of the apparatus according to the invention during testing the wheel suspension of the front wheels of a vehicle.

Fig. 2 shows in a perspective view the apparatus of fig. 1 during testing the wheel suspension of the rear wheels of the vehicle.

Fig. 3 shows the wheel suspension of the vehicle in a very schematical manner, wherein the apparatus according to the invention is schematically indicated.

Fig. 4 shows a plurality of diagrams to explain the operation of the apparatus according to the invention.

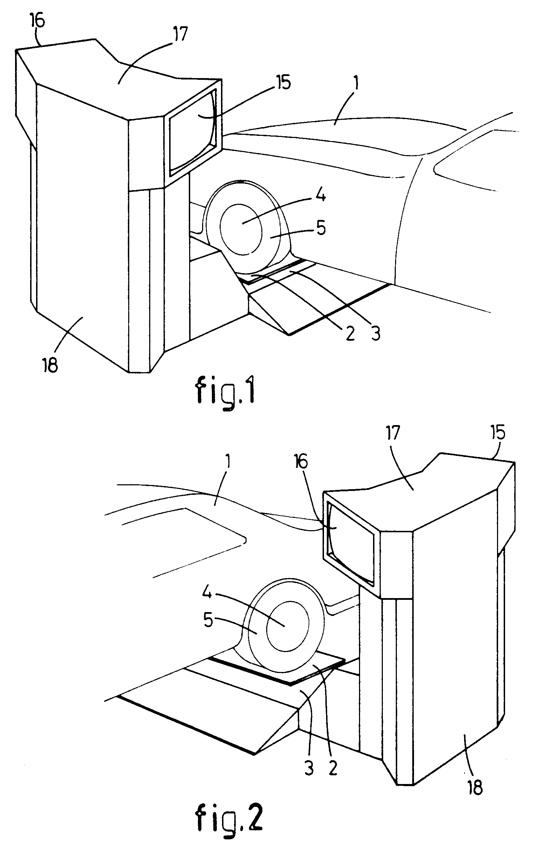

Referring to fig. 1 and 2 there is shown in a perspective view an apparatus for testing the wheel suspension of a vehicle 1, which apparatus is provided with two measuring plates 2, one of which is shown in the drawing. If desired it is also possible to provide the apparatus with one measuring plate only. The measuring plates 2 are movable mounted in a frame 3, which can be placed on the floor of a workshop, for example.

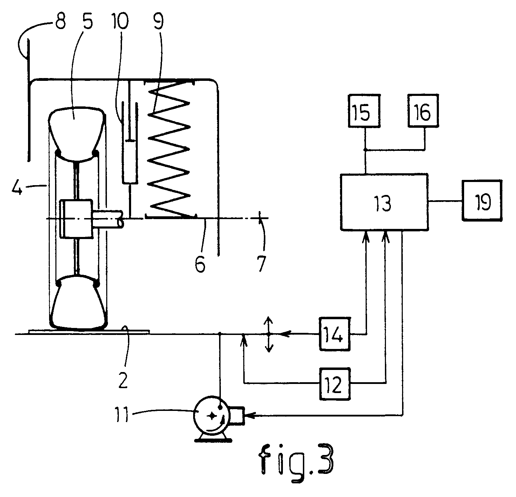

The wheel suspension of the vehicle 1 is very schematically shown in fig. 3, wherein a wheel 4 can be seen with an air tire 5, the wheel 4 being fixed to a support arm 6 connected through a hinge 7 with the vehicle body 8. A body support spring 9 and a shock absorber 10 are mounted between the body 8 and the support arm 6. The spring 9 has the purpose to keep the tire 5 continuously in contact with the road surface and to provide comfort for the passenger(s) in spite of roughness in the road surface. The shock absorber 10 absorbs the superfluous kinetic energy of the wheel 4 and the support arm 6. Further fig. 3 schematically shows one of both measuring plates 2 of the apparatus for testing this wheel suspension.

By means of an excitation mechanism 11 the measuring plates 2 can be brought in a usual manner into an up- and downward harmonic movement with a variable frequency of movement for passing through the frequency range in which the frequencies are located which occur while driving on the road surface with a usual speed. The excitation mechanism 11 comprises for example a motor with a flywheel wherein the motor rotates the flywheel until a frequency of movement of the measuring plate of approximately 25 Hz is obtained, whereafter the motor is switched off and the frequency slowly decreases from 25 Hz until 0 Hz by the inertial energy of the flywheel. In this frequency range the wheel suspension generally shows two resonances, namely the resonance of the sprung mass, i.e. the body 8 with the chassis not further shown, between 0,7 and 2 Hz and the resonance of the unsprung mass, i.e. the wheel 4 with a part of the support arm 6, between 10 and 15 Hz.

For measuring the dynamic vertical force exerted by the wheel 4 on the road surface during driving, the apparatus described is provided with a first measuring means 12 for each measuring plate 2, connected to a processing unit 13 for processing the measured values provided by this measuring means 12. Further a second measuring means 14 is provided for measuring the position of the measuring plate 2, which measuring means is also connected to the processing unit 13. The measuring means 14 may also be adapted to measure the speed or the acceleration of the measuring plate 2, from which information the position can easily be derived.

From these different measured values the processing unit 13 calculates a measured result which at the described apparatus is shown on two display units 15 and 16, respectively. These display units 15, 16 are mounted in a casing 17 with a base 18 which is combined with the frame 3 of the measuring plates 2 into a construction unit. Thereby a rather compact construction unit is obtained which occupies only a little space and can be installed in a simple manner. The display unit 15 encloses an acute angle with the driving direction so that this display unit 15 can be read by the driver during testing the wheel suspension of the front wheels. The display unit 16 encloses an obtuse angle with the driving direction so that this display unit 16 can be read by the driver during testing the wheel suspension of the rear wheels.

In the described apparatus the wheel suspension is seen as a system, wherein the processing unit 13 determines the transfer function of this system by means of the signals of the measuring means 12 and 14. In the described embodiment this transfer function is defined in the frequency domain as the quotient of the response of the system, the dynamic vertical force, and the excitation, the position of the measuring plate 2. For a further explanation reference is made to European patent application 91 202 285 of the same applicant.

As already noted above, vibrations are generated in the wheel suspension of the vehicle 1 during driving on a road surface due to the roughness of the road surface. The roughness of a road surface is typically a stochastic variable so that a road surface with a predetermined quality can be characterized by the power spectrum of the roughness. Experiments have shown that these road surface roughness have a normal distribution as a good approximation.

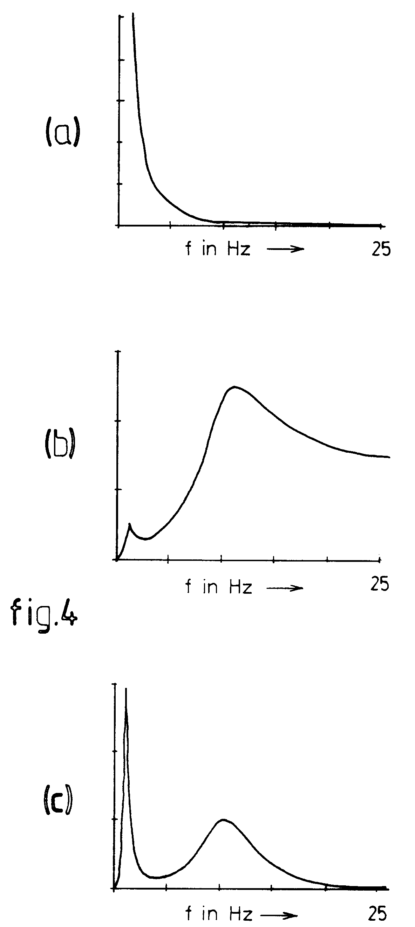

The speed with which the vehicle 1 drives on the road surface with predetermined quality, then determines the spectral density of the amplitude of the road surface roughnesses to which the wheel suspension is exposed. Fig. 4a shows as an example the power spectrum of the amplitude of the road surface roughness for a chosen road surface and a given speed of the vehicle 1. The power spectrum of the road surface roughness is stored in a memory 19 of the processing unit 13. By combining this power spectrum with a vehicle speed the curve of fig. 4a is obtained.

As appears from fig. 4a, the important vibration frequencies to which the wheel suspension of the vehicle is exposed during normal use on the road, are located in a range between 0 and 25 Hz. In this frequency range the wheel suspension generally shows two resonances, namely the resonance of the sprung mass (the body) between 0,7 and 2 Hz and the resonance of the unsprung mass (the wheel) between 10 and 15 Hz as appears from fig. 4b. In fig. 4c the spectral density of the vertical force is shown which is obtained when the wheel suspension with a transfer function according to fig. 4b is exposed to the road surface roughnesses with spectral density of fig. 4a.

The spectrum of the vibration amplitudes to which the wheel suspension is subjected at a usual speed of the vehicle contains a relatively high low-frequency contents as appears from fig. 4a. The performance of the wheel suspension at low frequencies, in particular at the resonance frequency between 0,7 and 2 Hz is therefore as important as the performance at higher frequencies. An important value in exposing the wheel suspension to these vibration frequencies is the amplitude of the dynamic vertical force exerted by the wheel on the measuring plate 2. The rms-value of this amplitude is computed in the described apparatus by integration in the frequency range from 0 up to 25 Hz of the product (see fig. 4c) of the spectrum of the vibrations to which the wheel suspension is subjected (fig. 4a) and the square of the transfer function (fig. 4b) of the wheel suspension under test of the vehicle 1. By means of the theory of stochastic vibrations it can be shown that, assuming that the average value of the amplitude of the vertical force equals the static wheel load, the rms-value of the amplitude of the vertical force equals the standard deviation of the amplitude of the vertical force. It is noted that the static wheel load follows directly from the weight of the vehicle.

By means of the statistic data of the average value and the standard deviation of the amplitude of the vertical force, the processing unit 13 can compute the probability that the amplitude of the vertical force is directed opposite to and is greater than the static wheel load at the speed for which the computation has taken place. When this is the case, the overall vertical force on the road surface is zero and the wheel has no contact anymore with the road and the tire cannot transfer any forces to the road surface anymore. The processing unit 13 can compare the computed probability with the predetermined maximum value and when the computed probability exceeds this maximum value, the processing unit 13 indicates for example a rejection of the wheel suspension.

Preferably the processing unit 13 finds the speed of the vehicle at which the probability that the wheel loses contact with the road surface, is less than a predetermined value, for example 0,3%, by means of the transfer function of the wheel suspension and the power spectrum of the roughnesses of a road surface with a predetermined quality as stored in the memory 19. When the estimated speed is lower than the design speed of the vehicle 1, a rejection can be derived from the measured result. The design speed of the vehicle 1 can usually be determined by means of the speed rating of the air tire used by the car manufacturer. If desired, the design speed can be introduced by an auxiliary means not further shown, so that the processing unit 13 can compare the determined speed with the design speed.

Of course it is also possible that the government prescribes a predetermined minimum value for the speed at which the probability to lose road contact equals for example 0,3%. This minimum value may be chosen in that case for example some what greater than the maximum allowable speed. When the speed found by the processing unit 13 is lower, the wheel suspension is rejected.

As the performance of the wheel suspension and thereby the road-holding safety is determined by the great extent by the stiffness of the air tire 5, it is of importance to be able to indicate the stiffness of the tire of the wheel under test. In the apparatus described this stiffness is estimated by the processing unit 13 by deriving the spring constant of the air tire 5 from the transfer function and to determine the tire compression from this spring constant and the static wheel load. Generally it applies that at a correct tire pressure the compression of the air tire should be approximately 22 mm. When the compression of the air tire determined by the processing unit 13 deviates from this standard value, a corresponding signal can be given.

The invention is not restricted to the above described embodiment which can be varied in a number of ways within the scope of the invention.

**Claims**

1. Apparatus for testing the wheel suspension of a vehicle, comprising at least one measuring plate, a mechanism for moving the measuring plate, a measuring device, a processing unit for processing the measured values provided by the measuring device and for determining from these measured values a transfer function of the wheel suspension seen as a system, and a display for displaying a measured result, **characterized in that** the processing unit determines a speed of the vehicle by means of the transfer function and the power spectrum of the roughness of a road surface with a predetermined quality at which speed the probability that the wheel of the wheel suspension under test loses contact with the road surface is smaller than a predetermined value.

2. Apparatus according to claim 1, **characterized in that** the processing unit computes said probability by means of the static wheel load and the rms-value of the amplitude of the dynamic vertical force.

3. Apparatus according to claim 2, **characterized in that** the processing unit computes said virtual value by integration in a frequency range of 0 up to 25 Hz of the product of the power spectrum of the vibration frequencies to which the wheel suspension under test is exposed when driving on the road surface at the speed to be determined and the square of the transfer function of the wheel suspension.

4. Apparatus according to anyone of the preceding claims, **characterized in that** the processing unit compares the speed as determined with the input design speed of the vehicle.

5. Apparatus according to anyone of claims 1-3, **characterized in that** the processing unit compares the speed as determined with a predetermined minimum value.

6. Apparatus according to anyone of claims 1-3, **characterized in that** instead of said speed, the processing unit determines by means of a predetermined speed the probability that the wheel of the wheel suspension under test loses contact with the road surface, wherein the processing unit compares this probability with a predetermined maximum value.

7. Apparatus according to anyone of the preceding claims, **characterized in that** the processing unit determines the spring constant of the air tire of the wheel of the wheel suspension under test and determines the tire compression from this spring constant and the static wheel load.

fig.1

fig.2

fig.3

(a)

f in Hz ⟶ 25

(b)

f in Hz ⟶ 25

fig.4

(c)

f in Hz ⟶ 25

European Patent Office

**EUROPEAN SEARCH REPORT**

Application Number

EP 91 20 3314

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | ATZ AUTOMOBILTECHNISCHE ZEITSCHRIFT vol. 82, no. 9, 1 September 1980, pages 469 - 474; F. KLINGER: 'Digitale Regelung von Mehrkomponenten-Betriebsfestigkeitsprüfständen für die Automobilindustrie' * page 473, paragraph 5.5 * | 1-3 | G01M17/04 |
| A | ATZ AUTOMOBILTECHNISCHE ZEITSCHRIFT vol. 65, no. 7, 1 July 1963, pages 197 - 205; M. MITSCHKE: 'Theoretische und experimentelle Schwingungsuntersuchungen am Kraftfahrzeug' * page 201, paragraph 3C; figures 9B,9C * * page 202, paragraph 4B; figure 13 * | 1-3 | |
| A | EP-A-0 359 337 (INITIAL INVESTMENTS N.V.) * the whole document * | 1-3 | |

TECHNICAL FIELDS SEARCHED (Int. Cl.5)

G01M

The present search report has been drawn up for all claims

| Place of search | Date of completion of the search | Examiner |
|---|---|---|
| THE HAGUE | 07 FEBRUARY 1992 | MUCS A.A. |